# EUROPEAN PATENT APPLICATION

(11) **EP 2 249 241 A1**
(43) Date of publication of application: **10.11.2010**
(21) Application number: 10161992.2
(22) Date of filing: 05.05.2010
(51) Int. Cl.: G06F 3/048

(54) **Apparatus and method for positioning menu items in elliptical menus**

(30) Priority: 05.05.2009 US 435421
(71) Applicant: Else Ltd, 43662 Isreal (IL)
(72) Inventor: Reifman, Eli, 43662, Ra'ianana (IL); Vonshak, Itai, Tel Aviv (IL); Rapaport, Alex, 245, ISRAEL (IL)
(74) Representative: Croston, David

(57) **Abstract**

The subject matter discloses a graphic user interface, comprising a touch screen application activated by a user's thumb and a main menu comprising one or more main options to be selected by a user using the user's thumb positioned on the screen in an area associated with a selected main option. The GUI also comprises one or more submenus comprising one or more secondary options to be selected by a user using the user's thumb positioned on the screen in an area associated with a selected secondary option. Each submenu is associated with a main option and a second menu is displayed when a main option is selected. The one or more secondary options are arranged in an elliptical arrangement having a center, wherein the center of the elliptical arrangement is a function of the location of the user's thumb.

## Description

### BACKGROUND OF THE INVENTION

### FIELD OF THE INVENTION

The present invention relates to display methods in general and to display menu items in circular menus in particular.

### DISCUSSION OF THE RELATED ART

Display of items or objects in menus within computerized devices plays an important role in the interface provided to users who use the computerized device. Such role is significant in the technological and commercial aspects of the computerized device, and enables efficient activation of the device and elegant browsing between the menu items.

These display abilities are more significant in hand-held devices, especially devices that comprise touch screens. For example, Iphone provides its users with the ability to browse between images or other media files or folders by moving a finger or thumb over the screen. Touch screens are widely used in hand-held devices, which are smaller, to allocate more room for the screen, instead of the button's area. As such, the users browse menu items and activate the hand held device by a pointing device, such as the finger, thumb or pen-like pointing device used in Personal Digital Assistance (PDA) devices. Many hand-held devices are operated single-handedly by the user. In such manner, the user holds the hand-held device with her palm, and grasps the device with the four fingers - index finger, middle finger, ring finger and the little finger. The user operates the hand-held device with her thumb. For example, selecting applications or functions, browsing menus, ringing, inputting text and the like.

Menus may be displayed in linear manner, for example from top to bottom, or from right to left. Such linear manner requires browsing many items for reaching the desired item. Another way to arrange menu items is using circular menus, for example a menu in which the items surround the pointing point of the pointing device, such as a mouse. Submenus may extend from a desired or selected menu item, while the items of the submenu are located in the general direction of the selected item of the main menu. When using a touch screen in a hand held device, the thumb may interfere in browsing the items, since the thumb may appear to press more than one level of items, for example an item in the main menu and an item in a submenu. Further, known menus and display methods do not address the physical patterns of the user's thumb when positioning menu items. For example, conventional circular menu, provided in 360 degrees around the pointing point, is not adapted to the thumb since it is uncomfortable to move the thumb to some directions because of the physical structure of the human's palm.

It is desired to provide display of menus in hand held devices, to provide efficient and comfortable access and activation by the user.

### SUMMARY OF THE PRESENT INVENTION

It is an object of the subject matter to disclose a graphic user interface (GUI) in a hand-held device, the GUI comprises a touch screen application activated by a user's thumb and a main menu that comprises one or more main options to be selected by a user using the user's thumb positioned on the screen in an area associated with a selected main option. The GUI further comprises one or more submenus comprising one or more secondary options to be selected by a user using the user's thumb positioned on the screen in an area associated with a selected secondary option; each submenu is associated with a main option and a second menu is displayed when a main option is selected. The one or more secondary options are arranged in an elliptical arrangement having a center, wherein the center of the elliptical arrangement is a function of the location of the user's thumb.

In some embodiments, the center of the circular arrangement is modified when the location of the user's thumb is modified. In some embodiments, the one or more submenus are displayed in at least two elliptical arrangements. In some embodiments, each of the at least two elliptical arrangement is a function of the previous selection or the location of the user's thumb.

In some embodiments, the one or more secondary options are selected by maneuvering the user's thumb between the main menu and the one or more submenus and releasing the user's thumb when reaching a desired item. In some embodiments, the options can be selected only from a menu located the farthest from the center.

In some embodiments, the location of the user's thumb is predetermined. In some embodiments, the location of the user's thumb can be inputted by a user of the hand-held device.

The hand-held device may be configured to operate single-handedly.

It is another object of the subject matter to disclose a method of positioning menu items displayed on a hand-held device comprising a touch screen application operated by a user's thumb, the method comprises receiving an indication concerning a movement of the user's thumb when operating the hand-held device, determining updated positions of at least one menu item according to the indication concerning the movement of the user's thumb and displaying the at least one menu item in an elliptical arrangement having a center according to the updated positions, wherein the center of the elliptical arrangement is a function of the location of the user's thumb. In some cases, the method further comprises a step of deactivating a menu after receiving a selection of a menu item from the menu.

### BRIEF DESCRIPTION OF THE DRAWINGS

Exemplary non-limited embodiments of the disclosed subject matter will be described, with reference to the following description of the embodiments, in conjunction with the figures. The figures are generally not shown to scale and any sizes are only meant to be exemplary and not necessarily limiting. Corresponding or like elements are optionally designated by the same numerals or letters.
Figure 1 shows a hand-held device, according to exemplary embodiments of the subject matter;
Figure 2 shows menu items arranged and displayed on a hand-held device, in accordance with some exemplary embodiments of the subject matter;
Figure 3 shows areas representing items in a submenu and a main menu of a hand-held device operated by touch screen applications, in accordance with some exemplary embodiments of the subject matter; and,
Figure 4 shows a flow of displaying menu items in an elliptical arrangement, suit for the thumb's movement, in accordance with some exemplary embodiments of the subject matter.

### DETAILED DESCRIPTION OF THE PREFERRED EMBODIMENT

One technical problem addressed by the subject matter is that known methods and arrangements of displaying menu items are not adapted for hand-held devices having a touch screen and selected or activated by the user's thumb. Prior art menu items are displayed in a manner not suitable for the thumb's natural movement.

One technical solution is a new display arrangement of menu items, a method of positioning menu items and a computer software product that implements the same. Arrangement of menu items according to the technical solution provides that at least some of the menu items be displayed in an elliptical manner. Such elliptical manner refers to an imaginary line between specific points in areas representing the menu items in the display unit of the hand-held device. When connecting the specific points, for example the right top point of each area representing a menu item, the result is elliptical, or a part of an elliptical outline. Such elliptical arrangement is adapted to the thumb's movement, as the thumb is used to navigate among menu items, select and activate them.

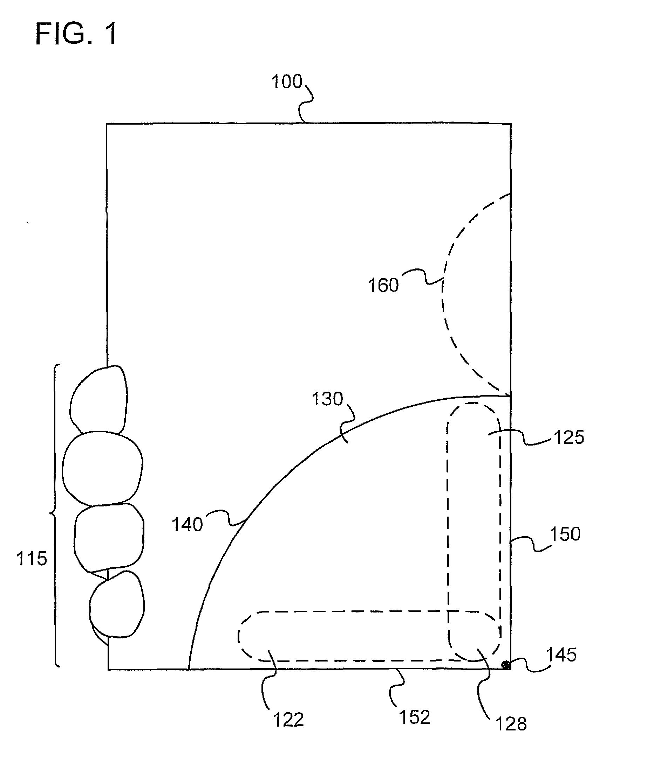

Figure 1 shows a hand-held device, according to exemplary embodiments of the subject matter. The hand-held device 100 is held by the user's fingers 115, and provides its user with a touch screen application, such that functions, applications and selections are performed according to the movement of the user's thumb (shown in both 120 and 125). The user grasps the hand-held device 100 with the fingers 115 and uses only the thumb to operate the hand-held device 100. The functions, applications and other implementations are displayed to the user via an interface, for example a graphic user interface (GUI). The thumb's range of movement is limited between an upper end 125 and a lower end 120, in order to provide the user with straightforward and accurate movement of the thumb. Such range of movement is circular in nature, and the center of the movement is a function of the location 128 of user's thumb. Such center of the movement may be a corner 145 of the hand-held device 100. The center may be predetermined by the developer or designer the GUI. In some embodiments, the user of the hand-held device 100may also select, determine or modify the center of the movement. This ergonomic display provides the user with comfortable and convenient arrangement of menu items in an area limited by the thumb's natural movement.

The area can also be limited by borderlines 150, 152 of the hand-held device 100 and a partial perimeter 140 of a circle having a center at the corner 145 of the hand-held device 100. Prior art circular menus are not adapted to the movement of the thumb, are not adapted to a hand-held device, and their center is not associated with the thumb. In some exemplary embodiments of the disclosed subject matter, menu items are arranged in an elliptical manner in an area limited by one partial perimeter and one borderline, for example an area surrounded by partial perimeter 160 and the borderline 150. In the examples of figure 1, the thumb is of a right-handed user. The hand-held device 100 may comprise a computerized application for providing the user with the ability to determine whether the menus are arranged in the right hand side or the left hand side of the hand-held device 100. Such computerized application may also enable the user to determine other settings or parameters, enlargement of items in a new menu activated upon selection of the user, number of levels in which submenus can be displayed simultaneously and the like. Such settings may be affected by the language or letters, media type used to display the menu items. Media types may be image, audio file, video file and the like.

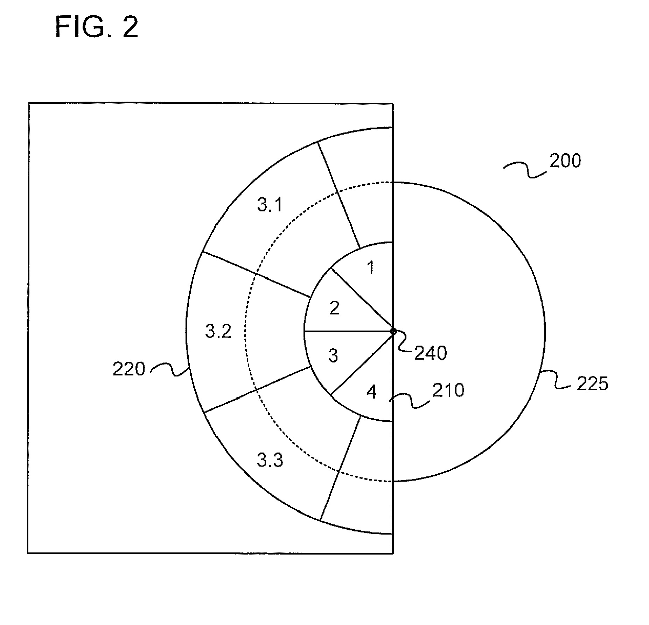

Figure 2 shows menu items arranged and displayed on a hand-held device, in accordance with some exemplary embodiments of the subject matter. Hand-held device 200 provides the user with a main menu and submenus. The main menu 210 comprises items 1, 2, 3 and 4. The items 1, 2, 3 and 4 are arranged in an elliptical manner around a corner 240 of the hand-held device 200. The term elliptical may refer to the fact that the center points of the areas representing each item are not located on the same line. Other geometrical definitions may be provided to the elliptical arrangement, for example, an imaginary line 225 passing between the areas representing the menu items 1, 2, 3 and 4 creates an elliptical shape. The areas refer to an area upon activation of which an item is selected.
Such activation may be by pressing the screen by the thumb in the specific area, by positioning the thumb on the specific area for a predefined period of time, for example 1.5 seconds, or by dragging an object from the menu. In some exemplary embodiments of the disclosed subject matter, such activation provides the user with a submenu 220 comprising menu items associated with the selected menu item. For example, in case the user selects an item "DATA", the submenu 220 may comprise menu items such as "contacts", "inbox", "calendar" and the like. In one exemplary embodiment of the disclosed subject matter, the area of the data items in the submenu 220, such as areas 3.1, 3.2 and 3.3, associated with menu item 3 of the main item 210, are larger than the area of item 3. As a result, the averaged mistakes probability when performing the selection is reduced.

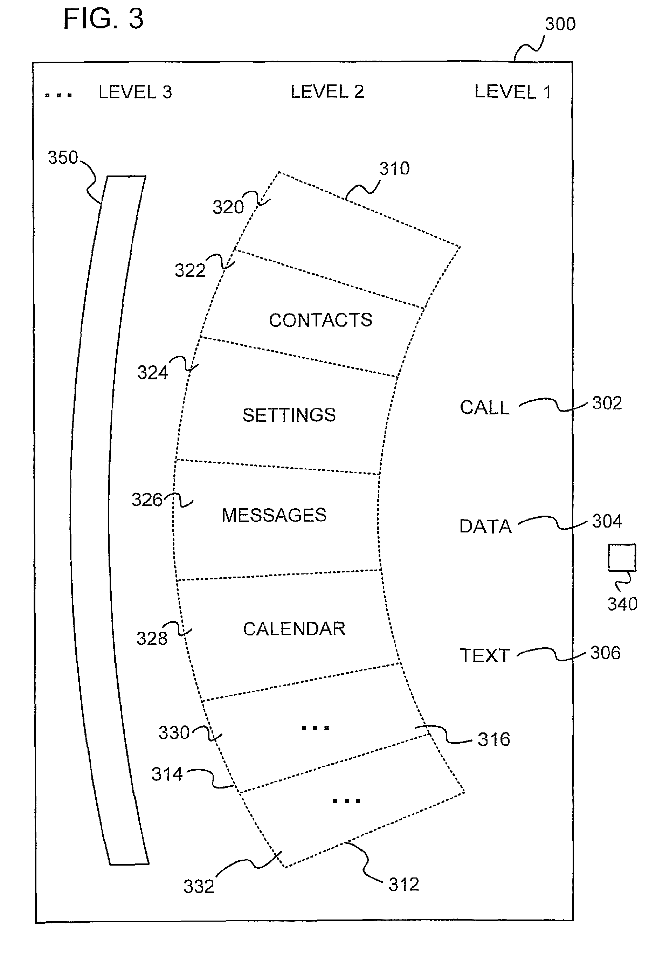

Figure 3 shows areas representing items in a submenu and a main menu of a hand-held device operated by touch screen applications, in accordance with some exemplary embodiments of the subject matter. Hand-held device 300 provides the user with a main menu displayed in level 1. The main menu comprises the following menu items - call 302, data 304 and text 306. In some embodiments of the disclosed subject matter, the main menu is provided in a linear manner, from top to bottom, while the rest of the levels, the menu items of the submenus, are provided in an elliptical arrangement, as disclosed in level 2 of the items displayed on the hand-held device 300. Level 2 comprises submenu displayed upon selection of a menu item of level 1. For example, when the user selects the menu item data 304, the menu items of level 2 are displayed, such as "contacts", "settings", "messages", "calendar" and the like. In some exemplary embodiments of the subject matter, each menu item is displayed along with a title, such as the "contacts" title. Such title is displayed within an area associated with the menu item, for example areas 320, 322, 324, 326, 328, 330 and 332. Activation of an area, via press or positioning of the thumb, results in activation of the menu item, and as a result, performing a command or display of another submenu associated with the selected menu item of level 2. Such activation may be of a submenu of level 3, such as submenu 350. The dashed lines show the areas associated with the submenus. Activation of the submenus may be performed by a flow comprising touching the screen, maneuvering the thumb over the screen and removing the finger in terminating the contact between the finger and the screen. This enables the user to select items in a sequential manner while receiving a constant feedback from the hand-held device 300 and reduces mistakes probability.

The menu items of level 2 are arranged in an elliptical shape. Such elliptical shape comprises the areas 320, 322, 324, 326, 328, 330 and 332 and is limited by upper line 310, lower line 312, right hand line 316 and left hand line 314. The entire area of the menu items of the submenu displayed in level 2 is elliptical. This elliptical shape is at least provided by the curved line of the internal limiting line, right hand line 316. The internal limiting line is a line limiting an elliptically shaped menu or submenu, located between the menu items and the location 340 of the thumb. Said location may be the center of movement of the thumb. Similarly, if the thumb were of a left-handed user, the internal limiting line would be left hand line 314. In case the thumb is of a right hand user, and the location 330 is at the right hand side of the hand-held device 300, the internal limiting line is the right hand line 316 and the external limiting line is the left hand line 314. In some embodiments, only one of the internal limiting line or the external limiting line is curved. In other embodiments, both limiting lines are curved. In some other embodiments, the internal limiting line is a concatenation of two or more polygonal lines, as the angle between two concatenated lines in larger than a predetermined number of degrees, for example 120 degrees. The shape of the areas is a function of the shape of the limiting lines 310, 312, 314 and 316.

The hand-held device 300 may enable the user to define the location that is the base point for positioning the menu items to be displayed. The location may be inputted as a number, for example the distance between the thumb's route and the hand-held device 300, the user's palm size, such as big, medium, small, and the like. For example, such location may be the basis for enlarging or lessening parameters such as the area associated with each menu item, the distance between the menu items and the borderlines of the hand-held device 300, the ratio between the length and width of the elliptical shape, and other parameters desired by a person skilled in the art and. The length may be the distance between the top most point and lowest point of areas representing menu items in a menu or submenu. The width may be the distance between the right most and left most points. The hand-held device may enable the user to define that menus and submenus are displayed from bottom to top, right to left and the like. In some cases, the elliptical arrangement of menu items is displayed to more than one thumb, for example, when both hands touch the screen in selecting objects.

In some embodiments, the hand-held device 300 comprises a graphic user interface having more than one center of movement. As such, some items are arranged in an elliptical manner surrounding a first center and other items are arranged in an elliptical arrangement surrounding a second center. The centers may be a function of the item's applicational or functional characteristics, such as the application the item runs, or depend on the user's settings. In some cases, a submenu, such as level 2 of figure 3, may be displayed according to the selection of the item in the main menu. For example, in case the user selects the item call 302, the item of the submenu of level 2 will be displayed in a higher position than selection of the item 306 of the main menu. The different submenus may have different centers, according to the previous selection or the location of the thumb.

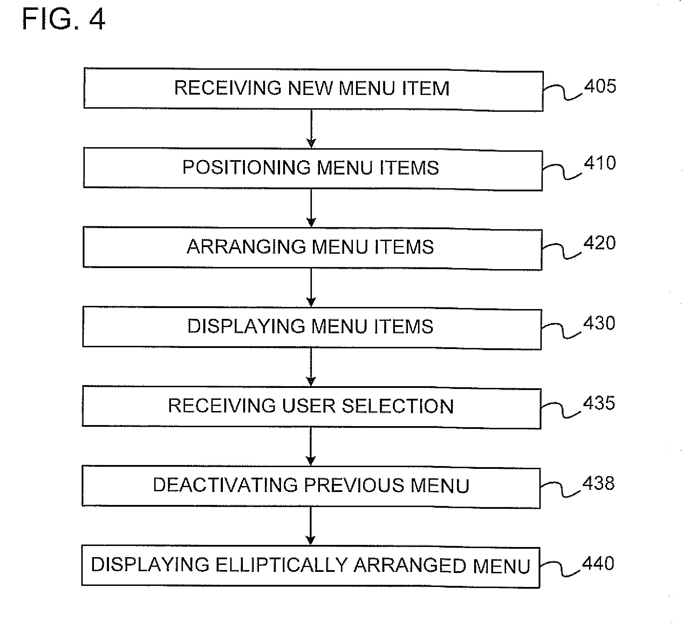

Figure 4 shows a flow of displaying menu items in an elliptical arrangement, suit for the thumb's movement, in accordance with some exemplary embodiments of the subject matter. The flow relates to a hand-held device operated by touch screen applications that comprises elliptical display of menu items, as explained above. In step 405, a new menu item is added to the menus. Such addition may be performed according to the user's desire, for example creation of a shortcut, or after installation of a new feature or application. Notification of such addition is received at a computerized module that manages the display of menu items in the hand-held device. In step 410, the computerized application arranges the menu items associated with the newly added menu item.
For example, in case the previous menu contained 4 items, the new menu contains 5 items, which require repositioning of the areas, and in some cases, enlarging the entire menu. Positioning of step 410 may also include determining the location of the added in the menu. The addition of an item results in actions that are also required when removing a menu item.

In step 420, the computerized application arranges the menu after addition or removal of the menu item. In some cases, the shape of the area that represents all menu items of the same menu is modified because of adding or removing a menu item. For example, the length or width of the area or one of the limiting lines may change accordingly, for example the internal limiting line. In other examples, when the external limiting line is a concatenation of two or more polygonal lines, the angle between the polygonal lines or the number or size of the polygonal lines may change after addition or removal of menu item. After the menu items are arranged, they are displayed to the user in step 430, display may be provided upon selection of another menu item, or just to verify that the settings satisfy the user after removal or addition of the menu item. After the user is provided with the new menu in step 430, she selects a menu item. Selection of the menu item may be performed by maneuvering a thumb on an area representing an item located in a menu. In case the user wishes to reverse a selection, the thumb points at a menu in a lower level menu that represents the menu from which the wrong item was selected. In step 435, the hand-held device receives the user's selection. In case the selected menu item is associated with a submenu to be opened upon selection, in step 438, the computerized application may deactivate other menu items in the menu from which a menu item was selected. For example, in figure 3, in case the user selects data, level 2 submenu is to be opened. When the submenu is opened, the previous menu is deactivated, to prevent mistakes by the user. Such deactivation may be implemented by removing the menu from the display, blurring the menu or by preventing access to said menu until the user maneuvers the thumb back on the display to the area representing the deactivated menu. Next, in step 440, the submenu is displayed to the user. In case the user points back to the item in the previous menu, the submenu is removed from the display unit and the previous menu, level 1 according to the example, is reactivated.

Another method is provided herein in accordance with some exemplary embodiments of the disclosed subject matter. The method provides for adapting the menu to the user's movement. The method comprises a step in which a computerized application within the hand-held device receives an indication concerning the thumb's movement or location. Such indication may be associated with the length of the user's thumb, may refer to the basis of the thumb's movement (as shown in figure 1) and the like. The indication may refer to the location of the thumb in the area representing an item. For example, the indication may be that the center of the thumb's movement is located below the lowest point of the hand-held device, or located 3 centimeters right or left from the hand-held device. The indication may be provided by the user using a receiving module in the hand-held device, a settings menu and the like. A sensing module of the hand-held device that detects the thumb's movement may provide the indication. Such indication is used for positioning menu items on the hand-held device. Next, the computerized application analyzes the indication and determines properties of the menu displayed on the hand-held device. Such properties may relate to the ratio between the length and width of the menu, the shape of the internal or external limiting lines, the center around which the menu items are arranged, and the like. Then, the menu items are displayed on the hand-held device according to the properties determined upon receipt of the indication.

As will be appreciated by one skilled in the art, the disclosed subject matter may be embodied as a system, method or computer program product. Accordingly, the disclosed subject matter may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, the present invention may take the form of a computer program product embodied in any tangible medium of expression having computer-usable program code embodied in the medium.

Any combination of one or more computer usable or computer readable medium(s) may be utilized. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CDROM), an optical storage device, a transmission media such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including but not limited to wireless, wireline, optical fiber cable, RF, and the like.

Computer program code for carrying out operations of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

## Claims

1. In a hand-held device, a graphic user interface, comprising:
a touch screen application activated by a user's thumb;
a main menu comprising one or more main options to be selected by a user using the user's thumb positioned on the screen in an area associated with a selected main option;
one or more submenus comprising one or more secondary options to be selected by the user using the user's thumb positioned on the screen in an area associated with a selected secondary option; each submenu is associated with a main option;
the one or more submenus are displayed when a main option is selected;
the one or more secondary options are arranged in an elliptical arrangement having a center, wherein the center of the elliptical arrangement is a function of the location of the user's thumb.

2. The graphic user interface of claim 1, wherein the center of the circular arrangement is modified when the location of the user's thumb is modified.

3. The graphic user interface of claim 1, wherein the one or more submenus are displayed in at least two elliptical arrangements.

4. The graphic user interface of claim 3, wherein each of the at least two elliptical arrangement is a function of the previous selection or the location of the user's thumb.

5. The graphic user interface of claim 1, wherein the one or more secondary options are selected by maneuvering the user's thumb between the main menu and the one or more submenus and releasing the user's thumb when reaching a desired item.

6. The graphic user interface of claim 1, wherein options can be selected only from a menu located the farthest from the center.

7. The graphic user interface of claim 1, wherein the location of the user's thumb is predetermined.

8. The graphic user interface of claim 1, wherein the location of the user's thumb can be inputted by a user of the hand-held device.

9. The graphic user interface of claim 1, wherein the hand-held device is configure to operate single-handedly.

10. A method of positioning menu items displayed on a hand-held device comprising a touch screen application operated by a user's thumb, the method comprising:
receiving an indication concerning a movement of the user's thumb when operating the hand-held device;
determining updated positions of at least one menu item according to the indication concerning the movement of the user's thumb;
displaying the at least one menu item in an elliptical arrangement having a center according to the updated positions, wherein the center of the elliptical arrangement is a function of the location of the user's thumb.

11. The method of claim 10, further comprises a step of deactivating a menu after receiving a selection of a menu item from the menu.
